Europäisches Patentamt

European Patent Office

Office européen des brevets

(19)

(11) **EP 1 154 130 B1**

(12) **EUROPÄISCHE PATENTSCHRIFT**

| | |
|---|---|
| (45) Veröffentlichungstag und Bekanntmachung des Hinweises auf die Patenterteilung: **10.08.2005 Patentblatt 2005/32** | (51) Int Cl.$^7$: **F01N 3/08**, B01D 53/94 |

(21) Anmeldenummer: **01109983.5**

(22) Anmeldetag: **25.04.2001**

(54) **Verfahren zur Entfernung von Stickoxiden und Russpartikeln aus dem mageren Abgas eines Verbrennungsmotors**

Process for separating nitrogen oxides and soot particles from a lean exhaust gas from a combustion engine

Procédé pour la séparation d'oxydes d'azote et de particules de suie d'un gaz d'échappement pauvre de moteur à combustion

(84) Benannte Vertragsstaaten:
**AT BE CH CY DE DK ES FI FR GB GR IE IT LI LU MC NL PT SE TR**

(30) Priorität: **12.05.2000 DE 10023439**

(43) Veröffentlichungstag der Anmeldung:
**14.11.2001 Patentblatt 2001/46**

(73) Patentinhaber: **Umicore AG & Co. KG**
**63457 Hanau-Wolfgang (DE)**

(72) Erfinder:
• **Hoffmann, Michael, Dr.**
**63741 Aschaffenburg (DE)**

• **Klein, Harald, Dr.**
**63856 Bessenbach (DE)**
• **Schäfer-Sindlinger, Adolf, Dr.**
**60488 Frankfurt (DE)**
• **Kreuzer, Thomas, Dr.**
**61184 Karben (DE)**

(74) Vertreter: **Stellbrink, Axel et al**
**Vossius & Partner**
**Siebertstrasse 4**
**81675 München (DE)**

(56) Entgegenhaltungen:
**EP-A- 0 758 713       EP-A- 0 976 915**
**DE-A- 19 850 757**

**Beschreibung**

Die Erfindung betrifft ein Verfahren zur Entfernung von Stickoxiden und Rußpartikeln aus dem mageren Abgas eines Verbrennungsmotors, welches auch geringe Konzentrationen an Schwefeloxiden enthält.

Verbrennungsmotoren mit magerem Abgas sind Dieselmotoren und mit mageren Luft/Kraftstoff-Gemischen betriebene Benzinmotoren, sogenannte Magermotoren. Im Abgas dieser Motoren finden sich als wesentliche Schadstoffe Kohlenmonoxid CO, unverbrannte Kohlenwasserstoffe HC, Stickoxide NOx und Rußpartikel, sowie Schwefeloxide SOx, die vom Schwefelgehalt des Kraftstoffes und der Schmieröle herrühren. Es enthält im Gegensatz zum Abgas von stöchiometrisch betriebenen Benzinmotoren einen hohen Prozentsatz von Sauerstoff. Die Luftzahl λ im Abgas dieser Motoren liegt gewöhnlich im Bereich zwischen 1,3 und 2.

Bei der Luftzahl λ handelt es sich um das auf stöchiometrische Bedingungen normierte Luft/Kraftstoff-Verhältnis. Das Luft/Kraftstoff-Verhältnis gibt an, wieviel Kilogramm Luft für die vollständige Verbrennung von einem Kilogramm Kraftstoff benötigt werden. Bei üblichen Kraftstoffen liegt das stöchiometrische Luft/Kraftstoff-Verhältnis bei einem Wert von 14,6, entsprechend einer Luftzahl von 1. Die Luftzahl des von der Brennkraftmaschine emittierten Abgases entspricht der Luftzahl des der Brennkraftmaschine zugeführten Luft/Kraftstoff-Gemisches. Abgas mit Luftzahlen über 1 wird als mager und Abgas mit Luftzahlen unter 1 wird als fett bezeichnet.

Die folgenden Erläuterungen beziehen sich auf den Dieselmotor. Dem Fachmann ist jedoch klar, dass das zu beschreibende Verfahren mit gleichem Erfolg auch zur Entfernung von Stickoxiden und Rußpartikeln aus dem Abgas von Magermotoren eingesetzt werden kann.

Die oxidierbaren Bestandteile im mageren Abgas von Dieselmotoren können wegen seines hohen Sauerstoffgehaltes mit hoher Wirksamkeit mit Hilfe von sogenannten Oxidationskatalysatoren, beziehungsweise Dieseloxidationskatalysatoren, entfernt werden. Dagegen bereitet die Entfernung der Stickoxide im mageren Abgas große Schwierigkeiten. Auch die Entfernung der Rußpartikel aus dem Abgas ist noch immer nicht zufriedenstellend gelöst.

Die für das Jahr 2005 geplanten Grenzwerte in der Europäischen Union für Dieselfahrzeuge zielen auf die gleichzeitige Verringerung von Stickoxid- und Rußemissionen. Die geplanten Grenzwerte für Fahrzeuge mit einem zulässigen Gesamtgewicht unter 2,5 Tonnen betragen für Stickoxide (NOx) 0,25 g/km und für Partikel 0,025 g/km. Durch konstruktive Maßnahmen am Dieselmotor kann nur jeweils eine der beiden Schadstoffkomponenten vermindert werden, während die andere gleichzeitig verstärkt auftritt.

So kann zum Beispiel durch Optimierung der Verbrennung die Emission von Ruß gesenkt werden. Die hierfür notwendigen höheren Verbrennungstemperaturen führen jedoch zu einer verstärkten Bildung von Stickoxiden. Die Stickoxide ihrerseits können durch Maßnahmen wie Abgasrückführung (EGR = Exhaust Gas Recirculation) vermindert werden, was jedoch wiederum die Emission der Rußpartikel erhöht. Der derzeitige Entwicklungsstand von Dieselmotoren für den genannten Anwendungsbereich stellt ein Optimum bezüglich der Emission von Stickoxiden und Ruß dar. Die Emission der Stickoxide liegt bei diesen Motoren im Teillastbereich unterhalb von 100 Vol.-ppm, die der Partikel bei etwa 0,5 g/km. Der Versuch, eine der beiden Komponenten durch motorische Maßnahmen weiter zu verringern führt automatisch zu einer erhöhten Emission der anderen Schadstoffkomponente.

Die geplanten Abgasgrenzwerte können daher nur durch eine geeignete Abgasnachbehandlung eingehalten werden. Zur Verminderung der Emission von Ruß werden derzeit hauptsächlich Rußfilter eingesetzt. Weit verbreitet sind hierbei die sogenannten Wandflußfilter, die ähnlich aufgebaut sind wie die bekannten Katalysator-Tragkörper in Wabenform. Bei den Wandflußfiltern sind die den Wabenkörper durchziehenden Strömungskanäle für das Abgas wechselseitig verschlossen, so dass das Abgas durch die porösen Wände des Filters strömen muss. Solche Wandflußfilter filtern bis zu 95% des Rußes aus dem Abgas heraus.

Mit zunehmender Rußbeladung nimmt der Strömungswiderstand der Filter zu. Die Filter müssen daher durch Verbrennen des Rußes regeneriert werden. Derzeit übliche Verfahren zur Regeneration von Partikelfiltern nutzen thermische oder katalytische Verfahren oder auch Additive zum Kraftstoff zur kontinuierlichen oder zyklischen Regeneration der Partikelfilter. Zur thermischen Verbrennung des Rußes sind Temperaturen oberhalb von 600° C notwendig. Durch eine katalytische Beschichtung der Filter oder durch geeignete Zusätze zum Kraftstoff kann die Zündtemperatur des Rußes auf etwa 450° C abgesenkt werden.

So beschreibt die DE 34 07 172 C2 eine Einrichtung zur Reinigung der Abgase von Dieselmotoren, welche in einem Gehäuse unmittelbar oder im Abstand hintereinander Filterelemente enthält, wobei mindestens ein Filterelement A eine die Zündtemperatur des Rußes senkende Beschichtung und mindestens ein Filterelement B eine die Verbrennung gasförmiger Schadstoffe fördernden Katalysator trägt und Filterelemente A und B sich einander mehrfach abwechseln.

Die EP 0 341 832 B1 beschreibt ein Verfahren zur Behandlung des Abgases von Schwerlastwagen. Das Abgas wird zuerst ohne Filtern über einen Katalysator geleitet, um das in ihm enthaltene Stickstoffmonoxid zu Stickstoffdioxid zu oxidieren. Das Stickstoffdioxid enthaltende Abgas wird dann zum Verbrennen der auf einem nachgeschalteten Filter abgelagerten Partikel verwendet, wobei die Menge des Stickstoffdioxids ausreicht, um die Verbrennung der auf dem Filter abgelagerten Teilchen bei einer Temperatur von weniger als 400° C durchzuführen.

Die EP 0 835 684 A2 beschreibt ein Verfahren zur Behandlung des Abgases von Kleinlast- und Personenkraftwagen. Das Abgas wird gemäß diesem Verfahren über zwei hintereinandergeschaltete Katalysatoren geführt, von denen der erste das im Abgas enthaltene Stickstoffmonoxid zu Stickstoffdioxid oxidiert, welches wiederum die auf dem zweiten Katalysator abgelagerten Rußpartikel zu $CO_2$ oxidiert, wobei Stickstoffdioxid nach folgender Reaktionsgleichung zu Stickstoff reduziert wird:

$$2NO_2 + 2C \rightarrow 2CO_2 + N_2 \qquad (1)$$

Die WO 99/09307 beschreibt ein Verfahren für die Verminderung der Rußemission von Schwerlastwagen. Gemäß diesem Verfahren wird das Abgas zunächst über einen Katalysator zur Oxidation von Stickstoffmonoxid zu Stickstoffdioxid und anschließend über ein Rußfilter geleitet, auf dem der abgeschiedene Ruß kontinuierlich oxidiert wird. Ein Teil des gereinigten Abgases wird über einen Kühler geleitet und dann der Ansaugluft des Dieselmotors zugemischt.

Voraussetzung für das einwandfreie Funktionieren der letzten Verfahren ist das Vorhandensein einer ausreichenden Menge an Stickstoffdioxid, damit eine möglichst vollständige Verbrennung des im Abgas enthaltenen Rußes nach Reaktionsgleichung (1) ablaufen kann. Hierzu wird Stickstoffdioxid mit Hilfe eines Oxidationskatalysators durch Oxidation von Stickstoffmonoxid zu Stickstoffdioxid erzeugt, was zu ungewollten Emissionen von Stickstoffdioxid führen kann.

Zur Verminderung von Stickoxiden im mageren Abgas von Verbrennungsmotoren sind sogenannte Stickoxid-Speicherkatalysatoren entwickelt worden. Funktionsweise und Zusammensetzung von Stickoxid-Speicherkatalysatoren sind zum Beispiel aus der EP 0 560 991 B1 bekannt. Als Speichermaterial enthalten diese Katalysatoren wenigstens eine Komponente aus der Gruppe der Alkalimetalle (z.B. Kalium, Natrium, Lithium, Cäsium), der Erdalkalimetalle (z.B. Barium, Kalzium) oder der Seltenerdmetalle (z.B. Lanthan, Yttrium). Als katalytisch aktives Element enthält der Speicherkatalysator Platin. Unter oxidierenden Abgasbedingungen, das heißt im Magerbetrieb, können die Speichermaterialien, die im Abgas enthaltenen Stickoxide in Form von Nitraten speichern. Hierzu ist es jedoch erforderlich, daß die Stickoxide, welche je nach Bauart des Motors und seiner Betriebsweise zu etwa 60 bis 95 % aus Stickstoffinonoxid bestehen, zunächst zu Stickstoffdioxid oxidiert werden. Dies geschieht an der Platinkomponente des Speicherkatalysators.

Da die Speicherkapazität eines Speicherkatalysators begrenzt ist, muss er von Zeit zu Zeit regeneriert werden. Um den Vorgang der Regeneration des Stickoxid-Speicherkatalysators eindeutig von der Regeneration des Partikelfilters unterscheiden zu können, wird die Regeneration des Stickoxid-Speicherkatalysators im Rahmen dieser Erfindung als Denitrierung bezeichnet. Zur Denitrierung des Stickoxid-Speicherkatalysators wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoff-Gemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die in Form von Nitraten gespeicherten Stickoxide wieder freigesetzt (desorbiert) und am Speicherkatalysator unter gleichzeitiger Oxidation von Kohlenmonoxid, Kohlenwasserstoffen und Wasserstoff, wie bei konventionellen Dreiweg-Katalysatoren zu Stickstoff reduziert.

Ein wesentliches Problem bei der Verwendung von Stickoxid-Speicherkatalysatoren ist der Schwefelgehalt des Kraftstoffes. Er wird vom Verbrennungsmotor überwiegend in Form von Schwefeldioxid emittiert. Schwefeldioxid wirkt für konventionelle Dreiweg-Katalysatoren und besonders für Stickoxid-Speicherkatalysatoren als Katalysatorgift. Die Vergiftung mit Schwefel führt bei Dreiweg-Katalysatoren zu einer Verringerung der Schadstoffumsetzung und zu einer schnellen Alterung des Katalysators. Im Allgemeinen ist die Vergiftung von Dreiweg-Katalysatoren weitgehend reversibel. Die Schwefelkomponenten des Abgases liegen auf dem Dreiweg-Katalysator in Form von Sulfaten vor. Die Regeneration des Katalysators erfolgt im normalen Fahrbetrieb, während Fahrphasen mit hohen Abgastemperaturen und leicht reduzierendem Abgas. Unter diesen Bedingungen werden die Sulfate reduziert und der Schwefel in Form von Schwefeldioxid oder Schwefelwasserstoff emittiert. Dieser Vorgang wird im Rahmen dieser Erfindung als Desulfatisierung bezeichnet. Die Emission von Schwefelwasserstoff während der Desulfatisierung kann durch bestimmte Maßnahmen am Katalysator und der Motorsteuerung weitgehend unterdrückt werden.

Die Vergiftung eines Stickoxid-Speicherkatalysators durch Schwefeloxide erfolgt prinzipiell in der gleichen Weise wie die Abspeicherung der Stickoxide. Das vom Motor emittierte Schwefeldioxid wird an der katalytisch aktiven Edelmetallkomponente des Speicherkatalysators zu Schwefeltrioxid oxidiert. Schwefeltrioxid reagiert mit den Speichermaterialien des Speicherkatalysators unter Bildung der entsprechenden Sulfate. Besonders nachteilig ist dabei, daß die Absorption von Schwefeltrioxid gegenüber der Absorption von Stickoxiden bevorzugt ist und die gebildeten Sulfate thermisch sehr stabil sind. Es kommt daher zu einer deutlichen Verminderung der Stickoxid-Speicherkapazität des Katalysators durch die Vergiftung mit Schwefeloxiden, die wegen der hohen thermischen Stabilität der Sulfate der Speichermaterialien auch unter reduzierenden Abgasbedingungen nur bei hohen Abgastemperaturen oberhalb von etwa 600° C reversibel ist. Die Desorptionsrate der Schwefeloxide ist abhängig vom Speichermaterial, von der Abgastemperatur und dem Anfettungsgrad des Abgases. Mit zunehmender Temperatur steigt die Desorptionsrate an. Wenn im folgenden von der Desulfatisierungstemperatur gesprochen wird, so ist damit eine Temperatur gemeint, bei der das betreffende Speichermaterial innerhalb einer angemessenen Zeit von 1 bis 20 Minuten im fetten Abgas von den Schwefelverbindungen befreit werden kann.

Die DE 198 13 654 A1 beschreibt ein Verfahren zum Betreiben einer Abgasreinigungsanlage, welche eine Schwefelfalle und einen Stickoxid-Speicherkatalysator enthält. Zur Entschwefelung der Schwefelfalle wird zunächst die Abgastemperatur bei magerem Abgas auf 640° C erhöht. Nach Absenken der Luftzahl auf Werte unter 1 setzt die Freisetzung des Schwefels ein. Die emittierte Schwefelverbindung hängt von der gewählten Luftzahl ab. Bei einer Luftzahl von 0,98, das heißt bei nur geringer Anfettung, wird der Schwefel fast ausschließlich in Form von Schwefeldioxid freigesetzt. Die Dauer der Desulfatisierung beträgt hierbei etwa 2 bis 3 Minuten. Wird die Luftzahl während der Desulfatisierung stärker abgesenkt, so verkürzt sich die für die Desulfatisierung benötigte Zeitdauer. Allerdings wird der Schwefel mit zunehmender Anfettung des Abgases immer stärker in Form von Schwefelwasserstoff freigesetzt. Bei einer Luftzahl von 0,75 beträgt die Dauer der Desulfatisierung nur noch 1,5 Minuten. Der Schwefel wird in diesem Fall jedoch fast ausschließlich in Form von Schwefelwasserstoff freigesetzt.

Die DE 198 50 757 betrifft ein Verfahren zur De-Sulfatierung einer einer mager betriebenen Brennkraftmaschine nachgeschalteten Katalysatoreinrichtung, wie z.B. ein $NO_x$-Speicherkatalysator und/oder Partikelkatalysator. Dabei werden die zur De-Sulfatierung erforderlichen hohen Temperaturen zumindest teilweise durch die Regeneration eines Partikelfilters erzeugt, der den Katalysatoren im Abgasstrang vorzugsweise einfach so geschaltet wird, dass eine ausreichend gute Wärmekopplung gewährleistet ist. Zur Minimierung von Wärmeverlusten wird der Partikelfilter hierbei vorzugsweise mit einem $NO_x$-Speicherkatalysator und/oder dem Partikelkatalysator in einem gemeinsamen Gehäuse angeordnet. Der optimale Zeitpunkt zur De-Sulfatierung wird dadurch ermittelt, dass die Schwefelbeladung des $NO_x$-Speicherkatalysators und/oder des Partikelkatalysators und/oder die Partikelbeladung des Partikelfilters bestimmt und mit vorgegebenen Grenzwerten verglichen wird.

Die EP 0 758 713 B1 betrifft ein Verfahren zum Reinigen des Abgases einer Verbrennungskraftmaschine mit dem ersten Schritt des Oxidierens von Stickstoffmonoxid im Abgas zu Stickstoffdioxid. Ferner werden die im Abgas enthaltenen Kohlenstoffteilchen gesammelt. Daraufhin wird das durch die Oxidation des Stickstoffmonoxids gebildete Stickstoffdioxid im Abgas mit den gesammelten Kohlenstoffteilchen umgesetzt, wodurch die gesammelten Kohlenstoffteilchen durch das Stickstoffdioxid im Abgas oxidiert werden und gleichzeitig im Abgas Stickstoffdioxid zu Stickmonoxid reduziert wird. Ferner wird das Stickstoffmonoxid aus dem Abgas entweder mittels eines Absorptionsmittels oder eines Reduktionskatalysators entfernt und schließlich das Stickstoffdioxid mit dem gesamten Kohlenstoff durch intermittierende Erhöhung der Abgastemperatur umgesetzt.

Die EP 0 976 915 A2 betrifft eine Abgasreinigungsvorrichtung mit einem $NO_x$-Absorptionsmittel, welches in dem Abgasstrom eines Verbrennungsmotors zum Absorbieren von $NO_x$ vorgesehen ist, wenn das Luft/Kraftstoff-Verhältnis des in das $NO_x$-Absorptionsmittel strömenden Abgases mager ist.

Aufgabe der vorliegenden Erfindung ist es, ein Verfahren zur Entfernung von Stickoxiden und Rußpartikeln aus einem auch Schwefeloxide enthaltenden mageren Abgas eines Verbrennungsmotors anzugeben, wobei die Rußpartikel auf einem Partikelfilter abgeschieden werden und das Partikelfilter zyklisch durch Abbrennen des Rußes regeneriert wird, ohne dass die Regeneration des Partikelfilters mit der Gefahr einer erhöhten Emission von Stickstoffdioxid verbunden ist.

Diese Aufgabe wird durch ein Verfahren gemäß den Anspruchen gelöst, welches dadurch gekennzeichnet ist, dass der Abgasstrom über einen Stickoxid-Speicherkatalysator und ein Partikelfilter geleitet wird, wobei Stickoxide und Schwefeloxide vom Speicherkatalysator unter mageren Abgasbedingungen adsorbiert und die Rußpartikel auf dem Partikelfilter abgeschieden werden und dass der Speicherkatalysator in einem ersten Zyklus periodisch durch Anfetten des Abgases denitriert wird und Regeneration des Partikelfilters sowie Desulfatisierung des Stickoxid-Speicherkatalysators in einem zweiten Zyklus vorgenommen werden, indem die Temperatur des mageren Abgases auf einen Wert erhöht wird, bei dem der Rußabbrand auf dem Partikelfilter gezündet und danach der Speicherkatalysator durch Anfetten des Abgases desulfatisiert werden können.

Das vorgeschlagene Verfahren setzt sich also aus zwei Zyklen zusammen. Im ersten Zyklus werden die im Abgas enthaltenen Stickoxide und Schwefeloxide auf dem Speicherkatalysator bei mageren Abgasbedingungen in Form von Nitraten und Sulfaten gespeichert und der Speicherkatalysator nach Erschöpfung seiner Stickoxid-Speicherkapazität unter fetten Abgasbedingungen denitriert. Gleichzeitig mit der Speicherung der Stickoxide und Schwefeloxide werden die Rußpartikel des Abgases auf dem Partikelfilter abgeschieden. Die zeitliche Länge dieses aus Speicherung und Denitrierung bestehenden ersten Zyklus ist relativ kurz. Die Gesamtlänge liegt zwischen 0,5 und 20 Minuten, während die Dauer der Denitrierung nur zwischen 1 und 20 Sekunden beansprucht.

Zur Denitrierung des Speicherkatalysators wird das Abgas angefettet, das heißt die Luftzahl des Abgases wird durch Erhöhen des Kohlenwasserstoffgehaltes des Abgases auf einen Wert unter 1, bevorzugt auf einen Wert zwischen 0,7 und 0,98 abgesenkt. Dies kann bei modernen Dieselmotoren entweder durch entsprechende Änderung des Luft/Kraftstoff-Gemisches erfolgen oder durch eine separate Eindüsung von Kraftstoff in den Abgasstrom kurz vor dem Stickoxid-Speicherkatalysator vorgenommen werden. Unter den während der Denitrierung vorherrschenden reduzierenden Abgasbedingungen werden die auf dem Speicherkatalysator in Form von Nitraten gespeicherten Stickoxide wieder freigesetzt und am Speicherkatalysator unter Verwendung von Kohlenwasserstoffen und Kohlenmonoxid als Reduktionsmittel zu Stickstoff reduziert. Die Denitrierung des Speicherkatalysators findet bei seiner normalen Arbeitstemperatur statt. Eine Temperaturerhöhung ist für diesen Vorgang nicht erforderlich.

Im zweiten Zyklus des Verfahrens werden das Partikelfilter regeneriert und der Stickoxid-Speicherkatalysator desulfatisiert. Durch die Abscheidung des im Abgas enthaltenen Rußes auf dem Partikelfilter erhöht sich kontinuierlich dessen Abgasgegendruck, so dass auch das Partikelfilter zyklisch durch Abbrennen des Rußes regeneriert werden muss. Zur Zündung des Rußabbrandes sind Temperaturen zwischen 400 und 650° C erforderlich, je nachdem ob das Partikelfilter mit einer Rußzündbeschichtung versehen ist oder nicht. Erfahrungsgemäß muss das Partikelfilter etwa alle 1000 km Fahrleistung regeneriert werden. Der zweite Zyklus ist daher in der Regel wesentlich länger als der erste Zyklus des Verfahrens.

Zur Regeneration des Partikelfilters und zur Desulfatisierung des Stickoxid-Speicherkatalysators wird die Abgastemperatur bei magerem Abgas auf einen Wert erhöht wird, bei dem der Rußabbrand auf dem Partikelfilter gezündet und danach der Speicherkatalysator durch Anfetten des Abgase desulfatisiert werden können. Die hierfür notwendige Temperatur hängt von der Materialauswahl für den Stickoxid-Speicherkatalysator und von einer möglichen Rußzündbeschichtung des Partikelfilters ab. Im allgemeinen liegt die Desulfatisierungstemperatur des Speicherkatalysators über der Zündtemperatur des Rußes auf dem Partikelfilter. In besonderen Fällen können sich diese Verhältnisse umkehren. Außerdem wird die für die Regeneration des Partikelfilters und für die Desulfatisierung des Speicherkatalysators benötigte Abgastemperatur noch durch eine mögliche Temperaturdifferenz zwischen Speicherkatalysator und Partikelfilter beeinflusst, die durch Wärmeverluste des Abgases durch die Abgasleitung zwischen Speicherkatalysator und Partikelfilter hervorgerufen wird.

Während der beschriebenen Denitrierung des Speicherkatalysators werden die in Form von Sulfaten gespeicherten Schwefeloxide nicht freigesetzt und verschlechtern somit die maximale Speicherkapazität für die Stickoxide kontinuierlich. In der Regel ist jedoch der Gehalt des Abgases an Schwefeloxiden deutlich geringer als der Gehalt an Stickoxiden, so dass erst nach längerem Betrieb des Dieselmotors eine merkliche Beeinträchtigung der Speicherkapazität für die Stickoxide stattfindet und eine Desulfatisierung eingeleitet werden muss. Die Desulfatisierung unterscheidet sich von der Denitrierung dadurch, dass sie wegen der hohen Beständigkeit der abgespeicherten Sulfate nur bei einer höheren Temperatur vonstatten geht, das heißt die Temperatur des Speicherkatalysators muss zu diesem Zweck angehoben werden.

Ebenso wie die Denitrierung des Speicherkatalysators muss seine Desulfatisierung zyklisch vorgenommen werden. Die Zykluslänge für die Denitrierung beträgt, wie schon oben angegeben, zwischen 0,5 und 20 Minuten. Dagegen muss der Speicherkatalysator abhängig vom Schwefelgehalt des Kraftstoffes nur etwa alle 1000 bis 10000 km Fahrleistung desulfatisiert werden, wobei es bei Verwendung von Materialien, die sich leicht desulfatisieren lassen, günstig sein kann, die Desulfatisierung wesentlich häufiger, zum Beispiel alle 100 bis 250 km, vorzunehmen.

Gemäß der hier beschriebenen Ausführungsform des Verfahrens sind die Desulfatisierung des Speicherkatalysators und die Regeneration des Partikelfilters aneinander gekoppelt. Nach Zünden des Rußabbrandes wird daher die Luftzahl des Abgases durch verstärkte Zufuhr von Kohlenwasserstoffen auf Werte zwischen 0,7 und 0,98 abgesenkt und dadurch die Desulfatisierung des Speicherkatalysators eingeleitet. Erfindungsgemäß wird also bei jeder Regeneration des Partikelfilters auch der Speicherkatalysator desulfatisiert.

In einer konkreten Ausführungsform dieser Verfahrensvariante wird der Stickoxid-Speicherkatalysator im Abgasstrom vor dem Partikelfilter angeordnet. Die Abgastemperatur wird durch Verbrennen von Kohlenwasserstoffen auf dem Speicherkatalysator angehoben. Die hierzu benötigten Kohlenwasserstoffe werden durch Nacheinspritzung von Kraftstoff in die Brennräume des Verbrennungsmotors dem Abgasstrom zugefügt oder vor dem Speicherkatalysator mit Hilfe einer Einspritzdüse in den Abgasstrom unter Beibehaltung einer netto oxidierenden Abgaszusammensetzung eingedüst. Nach Zündung des Rußabbrandes wird der Verbrennungsmotor zur Desulfatisierung des Speicherkatalysators mit einem fetten Luft/Kraftstoff-Gemisch zur Erzeugung einer reduzierenden Abgaszusammensetzung betrieben.

In einer zweiten Ausführungsform des Verfahrens wird der Stickoxid-Speicherkatalysator im Abgasstrom hinter dem Partikelfilter angeordnet und vor dem Partikelfilter ein zusätzlicher Oxidationskatalysator in den Abgasstrom eingefügt. Die Abgastemperatur für Regeneration des Partikelfilters und die Desulfatisierung des Speicherkatalysators wird durch Verbrennen von Kohlenwasserstoffen auf dem Oxidationskatalysator angehoben, wozu die benötigten Kohlenwasserstoffe durch Nacheinspritzung von Kraftstoff in die Brennräume des Dieselmotors dem Abgasstrom zugefügt oder vor dem Oxidationskatalysator mit Hilfe einer Einspritzdüse in den Abgasstrom unter Beibehaltung einer netto oxidierenden Abgaszusammensetzung eingedüst werden. Nach Zünden des Rußabbrandes auf dem Partikelfilter wird der Verbrennungsmotor zur Desulfatisierung des Speicherkatalysators mit einem fetten Luft/Kraftstoff-Gemisch zur Erzeugung einer reduzierenden Abgaszusammensetzung betrieben. Alternativ hierzu können Kohlenwasserstoffe zwischen Partikelfilter und Speicherkatalysator in den Abgasstrom eingedüst werden. Auch gemäß dieser Ausführungsform des Verfahrens sind die Desulfatisierung des Speicherkatalysators und die Regeneration des Partikelfilters aneinander gekoppelt.

In einer vereinfachten Ausführungsform des Verfahrens, die nur ein Bauteil benötigt, wird der Stickoxid-Speicherkatalysator in Form einer Beschichtung auf der Anströmseite und auf der Abströmseite des Partikelfilters aufgebracht. Die Beschichtung auf der Anströmseite des Partikelfilters kann auch durch eine Rußzündbeschichtung oder durch eine Beschichtung mit einem Oxidationskatalysator ersetzt sein.

In einer dritten Ausführungsform des Verfahrens wird die Kopplung zwischen Desulfatisierung des Speicherkatalysators und Regeneration des Partikelfilters aufgebrochen, um den Speicherkatalysator vor häufiger, thermischer Überlastung zu schützen. Wie schon ausgeführt wurde, muss das Partikelfilter in der Regel häufiger regeneriert werden als es notwendig ist, den Speicherkatalysator zu desulfatisieren. Daher ist es wünschenswert, das Partikelfilter auch unabhängig von einer Desulfatisierung des Speicherkatalysators regenerieren zu können. Hierzu wird der magere Abgasstrom nacheinander über einen Stickoxid-Speicherkatalysator und ein Partikelfilter geleitet. Zusätzlich zu den schon beschriebenen ersten und zweiten Zyklen wird in einem dritten Zyklus nur die Regeneration des Partikelfilters bei magerer Abgaszusammensetzung durch Anheben der Abgastemperatur vor dem Partikelfilter über die Rußzündtemperatur vorgenommen wird.

Erster und zweiter Zyklus werden wie schon bei den zuvor beschriebenen Verfahrensvarianten vorgenommen. Zur Durchführung der Regeneration des Partikelfilters im dritten Zyklus besteht die Möglichkeit, die Abgastemperatur hinter dem Speicherkatalysator und vor dem Partikelfilter durch Verbrennen von Kohlenwasserstoffen auf einem vor dem Partikelfilter in den Abgasstrom eingeschalteten Oxidationskatalysator auf die notwendige Rußzündtemperatur zu erhöhen. Der Oxidationskatalysator kann auch in Form einer Beschichtung auf die Anströmseite des Partikelfilters aufgebracht sein.

Die Kohlenwasserstoffe können mittels einer Düse vor dem Oxidationskatalysator unter Beibehaltung einer netto oxidierenden Abgaszusammensetzung in den Abgasstrom eingedüst werden. Alternativ besteht die Möglichkeit, die benötigten Kohlenwasserstoffe durch Nacheinspritzung in die Brennräume des Verbrennungsmotors zur Verfügung zu stellen. In diesem Fall darf der Abgasstrom jedoch nicht mehr durch den Speicherkatalysator geführt werden, sondern muss um ihn herum geleitet werden. Dies kann durch eine entsprechende Anordnung aus Abgasklappen und Umwegleitung verwirklicht werden.

Im Gegensatz zu den bekannten Verfahren zur Regeneration eines Partikelfilters mit Hilfe von Stickstoffdioxid, werden in der vorliegenden Erfindung die Stickoxide auf dem dem Partikelfilter vorgelagerten Stickoxid-Speicherkatalysator adsorbiert. Hierbei wird zwar gemäß den anerkannten Theorien zur Funktionsweise eines Stickoxid-Speicherkatalysators das im Abgas enthaltene Stickstoffinonoxid zunächst ebenfalls zu Stickstoffdioxid oxidiert. Stickstoffdioxid wird jedoch sofort auf dem Speicherkatalysator in Form von Nitraten gespeichert, so dass keine nennenswerten Mengen von Stickstoffdioxid den Katalysator verlassen.

Die Erfindung wird im folgenden an Hand der Figuren 1 bis 6 näher erläutert. Es zeigen:

> **Figur 1:** Abgasreinigungsvorrichtung zur Durchführung des Verfahrens nach Anspruch 2

> **Figur 2:** Abgasreinigungsvorrichtung zur Durchführung des Verfahrens nach Anspruch 4

> **Figur 3:** Abgasreinigungsvorrichtung zur Durchführung des Verfahrens nach einem der Ansprüche 6 bis 8

> **Figur 4:** Abgasreinigungsvorrichtung zur Durchführung des Verfahrens nach Anspruch 10

> **Figur 5:** Abgasreinigungsvorrichtung zur Durchführung des Verfahrens nach Anspruch 11

> **Figur 6:** Schematische Darstellung der Änderung von Luftzahl und Abgastemperatur im Verfahren nach Anspruch 1.

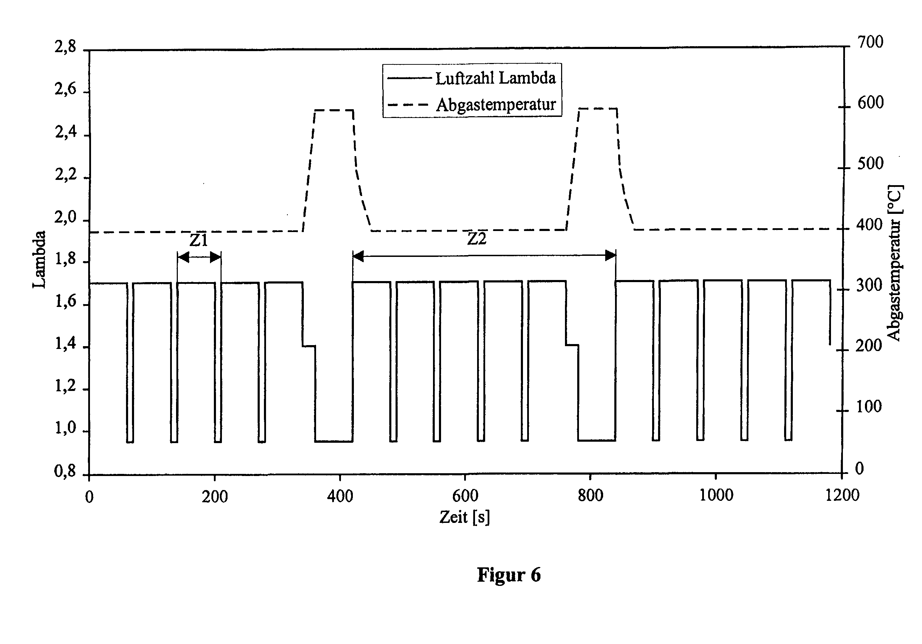

Figur 6 zeigt eine schematische Darstellung der Änderung von Luftzahl und Abgastemperatur während des Verfahrens gemäß Anspruch 1 mit den beiden überlagerten Verfahrenszyklen Z1 und Z2. Mit Z1 ist der erste Zyklus des Verfahrens aus Speicherung und Freisetzung der Stickoxide am Speicherkatalysator gemeint. Z2 bezeichnet den im allgemeinen längeren, zweiten Zyklus des Verfahrens aus Abtrennen des Rußes vom Abgas mit Hilfe des Partikelfilters und Regenerieren des Partikelfilters bei gleichzeitiger Desulfatisierung des Speicherkatalysators.

Die Zahlenangaben in Figur 6 sind nur beispielhaft gewählt und sollen in keiner Weise das durch die Patentansprüche definierte Verfahren beschränken.

In Figur 6 ist angenommen, dass der betrachtete Verbrennungsmotor mit einer Luftzahl Lambda von 1,7 bei konstanter Last betrieben wird. Die Abgastemperatur beträgt in diesem Zustand beispielsweise 400° C. Während des Betriebs mit dieser Luftzahl werden die im Abgas enthaltenen Stickoxide auf dem Speicherkatalysator in Form von Nitraten des Speichermaterials abgespeichert. Nach wenigen Minuten ist die Speicherkapazität des Katalysators für die Stickoxide erschöpft und er muß denitriert werden. Dies geschieht durch Absenken der Luftzahl auf einen Wert unter 1. In Figur 6 wurde der Wert 0,95 gewählt. Unter der dann herrschenden reduzierenden Abgaszusammensetzung werden die gespeicherten Nitrate innerhalb weniger Sekunden zersetzt und am Speicherkatalysator mit Hilfe der reduzierend wirkenden Abgaskomponenten zu Stickstoff, Wasser und Kohlendioxid umgesetzt. Danach wird die Luftzahl wieder auf den normalen Wert von 1,7 angehoben und die Abspeicherung der Stickoxide beginnt von neuem. Mit der Anhebung der Luftzahl auf den normalen Wert ist der erste Zyklus des Verfahrens abgeschlossen. In Figur 6 ist der erste Zyklus mit Z1 bezeichnet. Während des gesamten Zyklus Z1 variiert die Abgastemperatur bei konstanter Belastung des Verbrennungsmotors nur unwesentlich.

Die Anfettung des Abgases auf Luftzahlen unter 1 erfolgt bevorzugt durch Betreiben des Verbrennungsmotors mit einem fetten Luft/Kraftstoff-Gemisch. Ein solcher Betriebszustand ist kurzzeitig auch bei modernen Dieselmotoren möglich. Die nachträgliche Anfettung eines mageren Abgases auf Luftzahlen unter 1 würde den Kraftstoffverbrauch des Fahrzeugs unerwünscht erhöhen und durch zusätzliche Verbrennung der Kohlenwasserstoffe am Speicherkatalysator die Abgastemperatur ungewollt erhöhen.

Der Ablauf des ersten Zyklus wird von der Motorsteuerung unter Verwendung geeigneter Messsonden kontrolliert. So kann die Denitrierung zum Beispiel durch das Signal einer Stickoxidsonde eingeleitet werden, das das Überschreiten einer bestimmten Konzentration von Stickoxiden im Abgas hinter dem Stickoxid-Speicherkatalysator meldet. Auch Lambda-Sonden können für die Überwachung des ersten Zyklus eingesetzt werden. In der idealisierten Darstellung von Figur 6 weist Zyklus Z1 eine konstante Zykluslänge auf. Im realen Betrieb ändert sich jedoch die Zykluslänge in Abhängigkeit vom Betriebszustand des Verbrennungsmotors.

Nach einer Fahrleistung von etwa 1000 km muß das Partikelfilter wegen eines übermäßig steigenden Abgasgegendruck regeneriert werden. Der genaue Zeitpunkt kann zum Beispiel durch Messen des Abgasgegendrucks vor dem Partikelfilter ermittelt und der Motorsteuerung mitgeteilt werden. Zur Regeneration des Partikelfilters muß die Abgastemperatur von 400 auf etwa 600° C erhöht werden. Zu diesem Zweck können Kohlenwasserstoffe hinter dem Motor in das magere Abgas unter Beibehaltung einer netto oxidierenden Abgaszusammensetzung eingedüst und am Speicherkatalysator verbrannt werden. Die Luftzahl des Abgases erniedrigt sich dadurch zum Beispiel auf einen Wert von 1,4. Alternativ kann die Luftzahl auch durch Nacheinspritzung von Kraftstoff in die Brennräume des Verbrennungsmotors auf den gewünschten Wert abgesenkt werden.

Bei Erreichen einer Abgastemperatur von etwa 600° C (abhängig von einer eventuellen katalytischen Beschichtung des Partikelfilters) zündet der Rußabbrand auf dem Filter und schreitet dann relativ schnell voran. Nach dem Zünden des Rußabbrandes wird die Luftzahl des Abgases auf Werte unter 1 gesenkt, um bei den jetzt hohen Abgastemperaturen auch den Speicherkatalysator zu desulfatisieren. Die Absenkung der Luftzahl auf Werte unter 1 erfolgt bevorzugt wieder durch Betreiben des Verbrennungsmotors mit einem fetten Luft/Kraftstoff-Gemisch. Nach Desulfatisierung des Speicherkatalysators wird die Luftzahl wieder auf den normalen Wert angehoben und der Betrieb des Motors mit Zyklus 1 fortgeführt. Der zweite Zyklus des Verfahrens Z2 ist abgeschlossen, wenn der Abgasgegendruck wieder einen zulässigen Wert überschreitet und die Regeneration des Partikelfilters erneut eingeleitet werden muss.

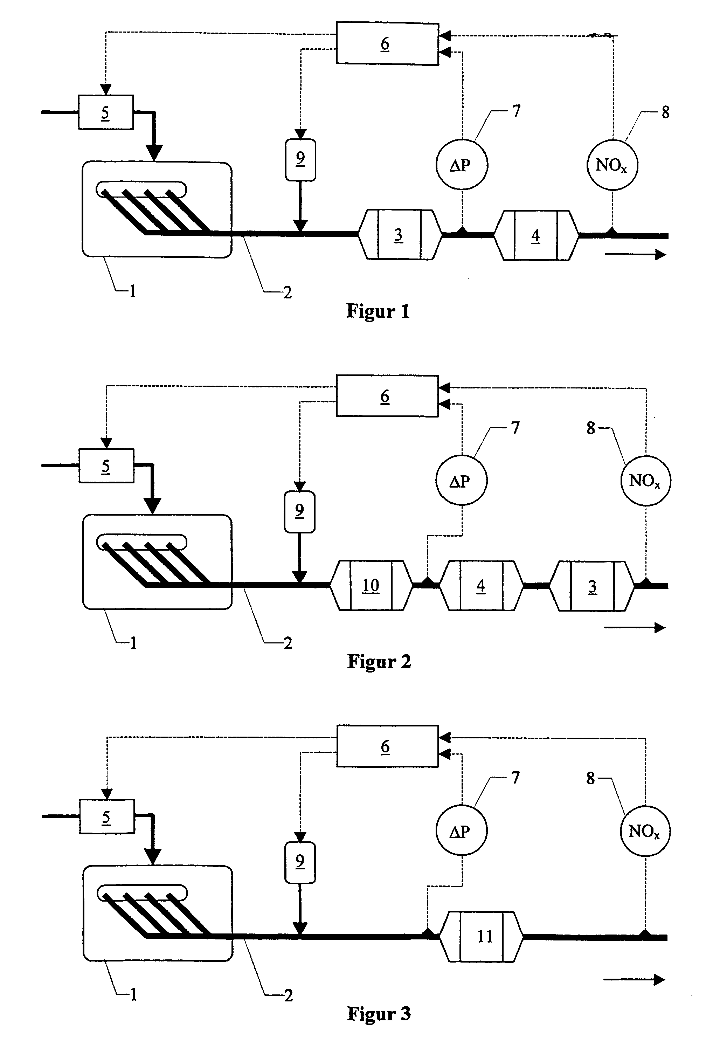

Die Figuren 1 bis 5 zeigen verschiedene für das Verfahren geeignete Abgasreinigungsvorrichtungen. In den Figuren bezeichnet (1) jeweils den Verbrennungsmotor, (2) seine Abgasleitung, (3) einen Stickoxid-Speicherkatalysator, (4) ein Partikelfilter, (5) eine Vorrichtung für die Kraftstoffzufuhr, (6) die elektronische Motorsteuerung, (7) eine Sonde für die Messung des Abgasgegendrucks vor dem Partikelfilter und (8) eine Stickoxidsonde hinter der Abgasreinigungsvorrichtung.

(9) bezeichnet jeweils eine Einheit für die Eindüsung von Kohlenwasserstoffen in die Abgasleitung. Sie kann eingesetzt werden, um das magere Abgas mit Kohlenwasserstoffen unter Beibehaltung einer netto oxidierenden Abgaszusammensetzung anzureichern.

Figur 1 zeigt eine Vorrichtung zur Durchführung des Verfahrens gemäß Patentanspruch 2. Die Eindüsvorrichtung (9) ist in Figur 1 optional, da die Temperatur des Abgases entweder durch separates Eindüsen von Kohlenwasserstoffen in die Abgasleitung vor dem Speicherkatalysator erhöht werden kann oder durch Nacheinspritzung von Kraftstoff in die Brennräume des Verbrennungsmotors.

Die Vorrichtung von Figur 2 ist für die Durchführung des Verfahrens gemäß Patentanspruch 4 geeignet. Der Stickoxid-Speicherkatalysator ist hier hinter dem Partikelfilter angeordnet. Vor dem Partikelfilter ist jetzt ein Oxidationskatalysator (10) angeordnet, auf dem die Kohlenwasserstoffe zur Erhöhung der Abgastemperatur für die Regeneration des Partikelfilters verbrannt werden.

Die Vorrichtung von Figur 3 ist für die Durchführung des Verfahrens gemäß den Patentansprüchen 6 bis 8 geeignet. (11) bezeichnet ein Partikelfilter, welches entweder auf der Anström- und Abströmseite mit einem Stickoxid-Speicherkatalysator beschichtet ist oder welches auf der Anströmseite eine Rußzündbeschichtung und auf der Abströmseite den Stickoxid-Speicherkatalysator aufweist. Als weitere Alternative kann das Partikelfilter auf der Anströmseite mit einem Oxidationskatalysator und auf der Abströmseite mit dem Stickoxid-Speicherkatalysator ausgerüstet sein.

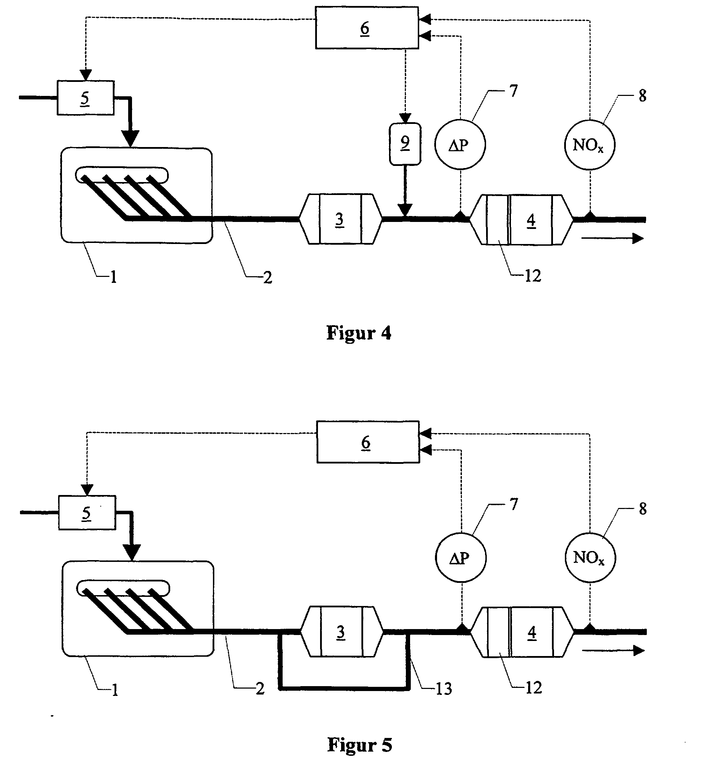

Figur 4 zeigt eine Vorrichtung zur Durchführung des Verfahrens nach Anspruch 10. (12) bezeichnet hierbei einen Oxidationskatalysator, der unmittelbar vor dem Partikelfilter in den Abgasstrom eingeschaltet ist. Es besteht auch die Möglichkeit, diesen Oxidationskatalysator als Beschichtung auf die Anströmseite des Partikelfilters aufzubringen.

Figur 5 zeigt eine Vorrichtung zur Durchführung des Verfahrens nach Anspruch 11. Die Bezugsziffer (13) bezeichnet hierbei eine Umwegleitung, die durch Schalten entsprechender Abgasventile das Abgas um den Speicherkatalysator herumführen kann, um eine Regeneration des Partikelfilters ohne Aufheizung des Speicherkatalysators zu ermöglichen.

## Patentansprüche

1. Verfahren zur Entfernung von Stickoxiden und Rußpartikeln aus dem mageren Abgas eines Verbrennungsmotors, welches auch geringe Konzentrationen an Schwefeloxiden enthält, wobei der Abgasstrom über einen Stickoxid-Speicherkatalysator und ein Partikelfilter geleitet wird, wobei Stickoxide und Schwefeloxide vom Speicherkatalysator unter mageren Abgasbedingungen adsorbiert und die Rußpartikel auf dem Partikelfilter abgeschieden werden **dadurch gekennzeichnet, dass** der Speicherkatalysator in einem ersten Zyklus periodisch durch Anfetten des Abgases denitriert wird und Regeneration des Partikelfilters sowie Desulfatisierung des Stickoxid-Speicherkatalysators in einem zweiten Zyklus vorgenommen werden, indem die Temperatur des mageren Abgases auf einen Wert erhöht wird, bei dem der Rußabbrand auf dem Partikelfilter gezündet und danach der Speicherkatalysator durch Anfetten des Abgase desulfatisiert werden können.

2. Verfahren nach Anspruch 1, **dadurch gekennzeichnet, dass** der Stickoxid-Speicherkatalysator im Abgasstrom vor dem Partikelfilter angeordnet ist und die Abgastemperatur für die Regeneration des Partikelfilters und die Desulfatisierung des Speicherkatalysators durch Verbrennen von Kohlenwasserstoffen auf dem Speicherkatalysator erhöht wird, wozu die benötigten Kohlenwasserstoffe durch Nacheinspritzung von Kraftstoff in die Brennräume des Verbrennungsmotors dem Abgasstrom zugefügt oder vor dem Speicherkatalysator mit Hilfe einer Einspritzdüse in den Abgasstrom unter Beibehaltung einer netto oxidierenden Abgaszusammensetzung eingedüst werden und dass nach Zünden des Rußabbrandes der Verbrennungsmotor zur Desulfatisierung des Speicherkatalysators mit einem fetten Luft/Kraftstoff-Gemisch zur Erzeugung einer reduzierenden Abgaszusammensetzung betrieben wird.

3. Verfahren nach Anspruch 2, **dadurch gekennzeichnet,** **dass** die Desulfatisierung des Speicherkatalysators bei einer Luftzahl des Abgases von 0,7 bis 0,98 vorgenommen wird.

4. Verfahren nach Anspruch 1, **dadurch gekennzeichnet,** **dass** der Stickoxid-Speicherkatalysator im Abgasstrom hinter dem Partikelfilter angeordnet ist und vor dem Partikelfilter ein zusätzlicher Oxidationskatalysator in den Abgasstrom eingefügt ist und die Abgastemperatur für Regeneration des Partikelfilters und die Desulfatisierung des Speicherkatalysators durch Verbrennen von Kohlenwasserstoffen auf dem Oxidationskatalysator erhöht wird, wozu die benötigten Kohlenwasserstoffe durch Nacheinspritzung von Kraftstoff in die Brennräume des Dieselmotors dem Abgasstrom zugefügt oder vor dem Oxidationskatalysator mit Hilfe einer Einspritzdüse in den Abgasstrom unter Beibehaltung einer netto oxidierenden Abgaszusammensetzung eingedüst werden und dass nach Zünden des Rußabbrandes der Verbrennungsmotor zur Desulfatisierung des Speicherkatalysators mit einem fetten Luft/Kraftstoff-Gemisch zur Erzeugung einer reduzierenden Abgaszusammensetzung betrieben wird.

5. Verfahren nach Anspruch 4, **dadurch gekennzeichnet,** **dass** die Desulfatisierung des Speicherkatalysators bei einer Luftzahl des Abgases von 0,7 bis 0,98 vorgenommen wird.

6. Verfahren nach Anspruch 1, **dadurch gekennzeichnet,** **dass** der Stickoxid-Speicherkatalysator in Form einer Beschichtung auf der Anströmseite und auf der Abströmseite des Partikelfilters aufgebracht ist.

7. Verfahren nach Anspruch 1, **dadurch gekennzeichnet,** **dass** der Stickoxid-Speicherkatalysator in Form einer Beschichtung auf der Abströmseite des Partikelfilters aufgebracht und die Anströmseite des Partikelfilters mit einer Rußzündbeschichtung ausgerüstet ist.

8. Verfahren nach Anspruch 1,

**dadurch gekennzeichnet,**
**dass** der Stickoxid-Speicherkatalysator in Form einer Beschichtung auf der Abströmseite des Partikelfilters aufgebracht und die Anströmseite des Partikelfilters mit einem Oxidationskatalysator beschichtet ist.

9. Verfahren nach Anspruch 1,
**dadurch gekennzeichnet,**
**dass** der Abgasstrom nacheinander über einen Stickoxid-Speicherkatalysator und ein Partikelfilter geleitet wird und in einem dritten Zyklus nur die Regeneration des Partikelfilters bei magerer Abgaszusammensetzung durch Anheben der Abgastemperatur vor dem Partikelfilter über die Rußzündtemperatur vorgenommen wird.

10. Verfahren nach Anspruch 9,
**dadurch gekennzeichnet,**
**dass** vor dem Partikelfilter ein Oxidationskatalysator im Abgasstrom angeordnet ist und im dritten Zyklus zur Anhebung der Abgastemperatur vor dem Partikelfilter Kohlenwasserstoffe unter Beibehaltung einer netto oxidierenden Abgaszusammensetzung vor dem Oxidationskatalysator in den Abgasstrom eingedüst und am Oxidationskatalysator verbrannt werden.

11. Verfahren nach Anspruch 10,
**dadurch gekennzeichnet,**
**dass** vor dem Partikelfilter ein Oxidationskatalysator im Abgasstrom angeordnet ist und im dritten Zyklus zur Anhebung der Abgastemperatur vor dem Partikelfilter Kohlenwasserstoffe durch Nacheinspritzung von Kraftstoff in die Brennräume des Dieselmotors dem Abgasstrom unter Beibehaltung einer netto oxidierenden Abgaszusammensetzung zugefügt werden und das so zusammengesetzte Abgas am Speicherkatalysator vorbei geleitet und auf den Oxidationskatalysator aufgegeben wird.

**Claims**

1. A method for removing nitrogen oxides and soot particulates from the lean exhaust gas of a combustion engine that also contains low concentrations of sulfur oxides, wherein the exhaust gas stream is passed over a nitrogen oxide storage catalyst and a particulate filter, where nitrogen oxides and sulfur oxides are adsorbed by the storage catalyst under lean exhaust gas conditions and the soot particles are deposited on the particulate filter, **characterized in that** the storage catalyst is denitrated periodically in a first cycle by enriching the exhaust gas, and regenerating the particulate filter and desulfurizing the nitrogen oxide storage catalyst are carried out in a second cycle by increasing the temperature of the lean exhaust gas to a value at which the soot combustion on the particulate filter is ignited and then the storage catalyst can be desulfurized by enriching the exhaust gas.

2. The method according to claim 1, **characterized in that** the nitrogen oxide storage catalyst is arranged in the exhaust gas stream in front of the particulate filter and the exhaust gas temperature is increased for regeneration of the particulate filter and desulfurization of the storage catalyst by combustion of hydrocarbons on the oxidation catalyst, by adding the required hydrocarbons to the exhaust gas stream by after-injection of fuel into the combustion chambers of the combustion engine or by injecting them into the exhaust gas stream in front of the oxidation catalyst with the aid of an injection nozzle while maintaining a net oxidizing gas composition and that after ignition of the soot combustion the combustion engine is operated with a rich air/fuel mixture to generate a reducing exhaust gas composition for desulfurization of the storage catalyst.

3. The method according to claim 2, **characterized in that** the desulfurization of the storage catalyst is carried out at an exhaust gas/air ratio of 0.7 to 0.98.

4. The method according to claim 1, **characterized in that** the nitrogen oxide storage catalyst is arranged in the exhaust gas stream after the particulate filter and an additional oxidation catalyst is inserted into the exhaust gas stream in front of the particulate filter and the exhaust gas temperature is increased for regeneration of the particulate filter and desulfurization of the storage catalyst by combustion of hydrocarbons on the oxidation catalyst, by adding the required hydrocarbons to the exhaust gas stream by after-injection of fuel into the combustion chambers of the diesel engine or by injecting them into the exhaust gas stream in front of the oxidation catalyst with the aid of an injection nozzle while maintaining a net oxidizing gas composition and that after ignition of the soot combustion the combustion engine is operated with a rich air/fuel mixture to generate a reducing exhaust gas composition for desulfurization of the storage catalyst.

5. The method according to claim 4, **characterized in that** the desulfurization of the storage catalyst is carried out at an exhaust gas/air ratio of 0.7 to 0.98.

6. The method according to claim 1, **characterized in that** the nitrogen oxide storage catalyst is applied in the form of a coating onto the inlet side and onto the outlet side of the particulate filter.

7. The method according to claim 1, **characterized in that** the nitrogen oxide storage catalyst is applied in the form of a coating onto the outlet side of the particulate filter and the inlet side of the particulate filter is provided with a soot ignition coating.

8. The method according to claim 1, **characterized in that** the nitrogen oxide storage catalyst is applied in the form of a coating to the outlet side of the particulate filter and the inlet side of the particulate filter is coated with an oxidation catalyst.

9. The method according to claim 1, **characterized in that** the exhaust gas stream is passed successively over a nitrogen oxide storage catalyst and a particulate filter and in a third cycle only the regeneration of the particulate filter is carried out at a lean exhaust gas composition by increasing the exhaust gas temperature in front of the particulate filter beyond the soot ignition temperature.

10. The method according to claim 9, **characterized in that** an oxidation catalyst is arranged in the exhaust gas stream in front of the particulate filter and in the third circle hydrocarbons are injected into the exhaust gas stream to increase the exhaust gas temperature in front of the particulate filter while maintaining a net oxidizing exhaust gas composition in front of the oxidation catalyst, and burnt on the oxidation catalyst.

11. The method according to claim 10, **characterized in that** an oxidation catalyst is arranged in the exhaust gas stream in front of the particulate filter and in a third cycle hydrocarbons are added to the exhaust gas stream by after-injection of fuel into the combustion chambers of the diesel engine in order to increase the exhaust gas temperature in front of the particulate filter, while maintaining a net oxidizing exhaust gas composition, and the thus composed exhaust gas is diverted at the storage catalyst and sent to the oxidation catalyst.

## Revendications

1. Procédé de suppression des oxydes d'azote et des particules de noir de carbone dans les gaz d'échappement à mélange pauvre d'un moteur à combustion interne qui contient également de faibles concentrations d'oxydes de soufre, selon lequel on conduit l'écoulement des gaz d'échappement sur un catalyseur à accumulation d'oxydes d'azote et un filtre à particules, les oxydes d'azote et les oxydes de soufre étant adsorbés par le catalyseur à accumulation dans des conditions de gaz d'échappement à mélange pauvre et les particules de noir de carbone étant isolées sur le filtre à particules,
   **caractérisé en ce que**
   le catalyseur à accumulation est, dans un premier cycle, dénitrifié de manière périodique en enrichissant les gaz d'échappement et la régénération du filtre à particules ainsi que la désulfuration du catalyseur à accumulation d'oxydes d'azote sont effectuées dans un second cycle où la température des gaz d'échappement à mélange pauvre est augmentée sur une valeur qui permet d'allumer la combustion du noir de carbone sur le filtre à particules et, ensuite, de désulfurer le catalyseur à accumulation en enrichissant les gaz d'échappement.

2. Procédé selon la revendication 1,
   **caractérisé en ce que**
   le catalyseur à accumulation d'oxydes d'azote est disposé dans l'écoulement des gaz d'échappement avant le filtre à particules et la température des gaz d'échappement est augmentée sur le catalyseur à accumulation pour régénérer le filtre à particules et désulfurer le catalyseur à accumulation en brûlant les hydrocarbures, et pour cela les hydrocarbures nécessaires sont ajoutés dans l'écoulement des gaz d'échappement par une nouvelle injection de carburant dans les chambres de combustion du moteur à combustion interne ou injectés dans l'écoulement des gaz d'échappement, avant le catalyseur à accumulation, à l'aide d'une buse d'injection tout en conservant une composition nettement oxydante des gaz d'échappement et, après l'allumage de la combustion du noir de carbone, le moteur à combustion interne est entraîné pour désulfurer le catalyseur à accumulation avec un mélange air-carburant riche pour produire des gaz d'échappement à composition réductrice.

3. Procédé selon la revendication 2,
   **caractérisé en ce que**
   la désulfuration du catalyseur à accumulation s'effectue pour un débit d'air dans les gaz d'échappement compris entre 0,7 et 0,98.

4. Procédé selon la revendication 1,
   **caractérisé en ce que**
   le catalyseur à accumulation d'oxydes d'azote est disposé dans l'écoulement des gaz d'échappement derrière le filtre à particules et, devant le filtre à particules, un catalyseur à oxydation supplémentaire est introduit dans l'écoulement des gaz d'échappement, la température des gaz d'échappement étant augmentée sur le catalyseur à oxydation pour régénérer le filtre à particules et pour désulfurer le catalyseur à accumulation en brûlant les hydrocarbures, et pour cela les hydrocarbures nécessaires sont ajoutés à l'écoulement des gaz d'échappement par une nouvelle injection de carburant dans les chambres de combustion du moteur diesel ou injectés dans l'écoulement des gaz d'échappement, avant le catalyseur à oxydation, à l'aide d'une buse d'injection tout en conservant une composition nettement oxydante des gaz d'échappement, et après l'allumage de la combustion du noir de carbone, le moteur à combustion interne est entraîné pour désulfurer le catalyseur à accumulation avec un mélange air-carburant riche pour produire des gaz d'échappement à composition réductrice.

**5.** Procédé selon la revendication 4,
**caractérisé en ce que**
la désulfuration du catalyseur à accumulation s'effectue pour un débit d'air dans les gaz d'échappement compris entre 0,7 et 0,98.

**6.** Procédé selon la revendication 1,
**caractérisé en ce que**
le catalyseur à accumulation d'oxydes d'azote est appliqué sous la forme d'une couche du côté de l'entrée et du côté de sortie du filtre à particules.

**7.** Procédé selon la revendication 1,
**caractérisé en ce que**
le catalyseur à accumulation d'oxydes d'azote est appliqué sous la forme d'une couche du côté du déversement du filtre à particules et le côté d'entrée du filtre à particules est doté d'une couche de combustion du noir de carbone.

**8.** Procédé selon la revendication 1,
**caractérisé en ce que**
le catalyseur à accumulation d'oxydes d'azote est appliqué sous la forme d'une couche du côté du déversement du filtre à particules et le côté d'entrée du filtre à particules est recouvert d'un catalyseur à oxydation.

**9.** Procédé selon la revendication 1,
**caractérisé en ce que**
l'écoulement des gaz d'échappement est dirigé successivement sur un catalyseur à accumulation d'oxydes d'azote et un filtre à particules et, dans un troisième cycle, la régénération du filtre à particules est effectuée seulement lorsque la composition des gaz d'échappement est pauvre en augmentant la température des gaz d'échappement avant le filtre à particules au-dessus de la température de combustion du noir de carbone.

**10.** Procédé selon la revendication 9,
**caractérisé en ce qu'**
un catalyseur à oxydation est disposé dans l'écoulement des gaz d'échappement avant le filtre à particules et, dans le troisième cycle destiné à augmenter la température des gaz d'échappement avant le filtre à particule, des hydrocarbures sont injectés dans l'écoulement des gaz d'échappement tout en conservant une composition nettement oxydante des gaz d'échappement avant le catalyseur à oxydation et sont brûlés au niveau du catalyseur à oxydation.

**11.** Procédé selon la revendication 10,
**caractérisé en ce qu'**
un catalyseur à oxydation est disposé dans l'écoulement des gaz d'échappement avant le filtre à particules et, dans le troisième cycle destiné à augmenter la température des gaz d'échappement avant le filtre à particule, des hydrocarbures sont ajoutés dans l'écoulement des gaz d'échappement, par une nouvelle injection de carburant dans les chambres de combustion du moteur diesel, tout en conservant une composition nettement oxydanten des gaz d'échappement, les gaz d'échappement ainsi composés étant redirigés vers le catalyseur à accumulation et distribués sur le catalyseur à oxydation.

**Figur 1**

**Figur 2**

**Figur 3**

**Figur 4**

**Figur 5**

**Figur 6**